# EUROPEAN PATENT APPLICATION

(11) **EP 1 482 627 A2**
(43) Date of publication of application: **01.12.2004**
(21) Application number: 04009700.8
(22) Date of filing: 23.04.2004
(51) Int. Cl.: H02K 53/00

(54) **Isolated electric power generator by utilizing leaking magnetic flux**

(30) Priority: 28.05.2003 US 447403
(71) Applicant: Chang, Chin Shiou, Taiwan (TW)
(72) Inventor: Chang, Chin Shiou, Taiwan (TW)
(74) Representative: Jorio, Paolo

(57) **Abstract**

Device for power generation by external magnetic flux change and without consuming any other energy is disclosed. The device includes a ferromagnetic core, one or plural coils winding the ferromagnetic core, several pairs of output terminals, and an envelope enclosing the said parts. In the usage of the present invention, the said device does not connect to any other electric power source system.

## Description

### FIELD OF THE INVENTION

The present invention relates to a device for power generation by external magnetic flux change without consuming any other energy, and without connecting to any other electric power source system.

### BACKGROUND OF THE INVENTION

The prior devices similar to the present invention, such as magnetic detector and power generating equipment must use battery, or plug-in electric power, and even gasoline to achieve magnetic flux changing, but it will incur source waste and pollution problems, and any electric power generating devices, using gasoline or connecting to other electric power sources; have dangerous possibility and instability.

### SUMMARY OF THE INVENTION

The present invention pertains to power generating devices, particularly to power generating devices using only external magnetic flux change, without using any other energy, and without connecting to any other electric power source system.

The object of the present invention is to achieve a kind of power generating device using only external magnetic flux change, leaking from electric motor, electric power generator, or alternating electric current socket, etc., without using gasoline, or other electric energy and without connecting to any other electric power source system, and to provide a kind of power generating device with advantage of energy saving, no pollution and safety.

The physical principle of present invention is Faraday's law, stating that the electromotive force induced by changing magnetic field is proportional to changing rate of magnetic flux.

### BRIEF DESCRIPTION OF THE DRAWINGS

- Fig. 1.: illustrates the acting principle according to the present invention
- Fig. 2.: illustrates the interior construction according to the present invention.
- Fig. 3.: illustrates the three-dimension view according to the present invention
- Fig. 4.: illustrates the application of the present invention to automobile

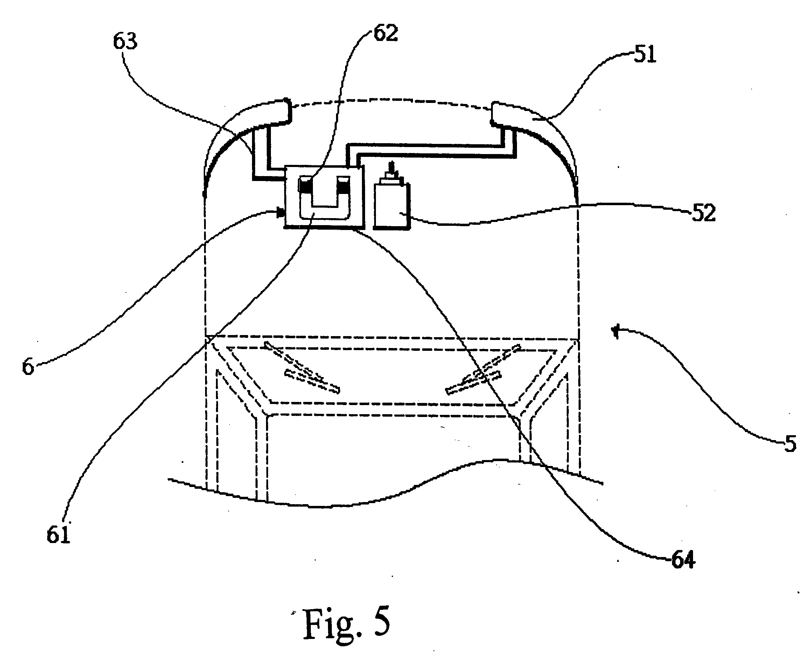

- Fig. 5.: illustrates the section view of Fig. 4
- Fig. 6.: illustrates the application of the present invention to aquarium A.
- Fig. 7.: illustrates the application of the present invention to aquarium B.
- Fig. 8.: illustrates the application of the present invention to scenery design.

### REFERENCE NUMERALS IN DRAWINGS

- 10: The whole present invention device
- 11: ferromagnetic core
- 12: coil
- 13: output terminal
- 14: envelope
- 20: electric motor

### DETAILED DESCRIPTION OF THE REFERRED EMBODIMENTS

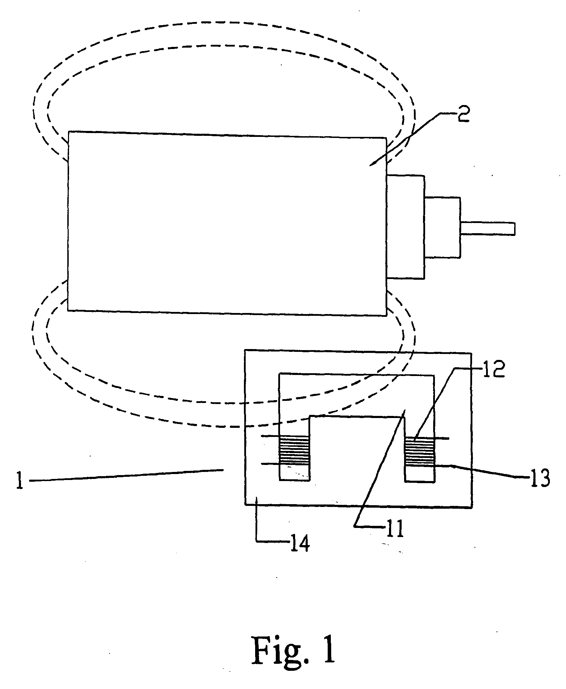

Fig. 1 illustrates the acting principle of the power generating device of the present invention 1, which comprises a ferromagnetic core 11, one or plural coils 12 winding the ferromagnetic core 11, one or plural pairs of electric output terminals 13, whereof number of pairs depends on individual design. As the electric motor 2 emitting changing magnetic flux, the present invention1 converts the changing magnetic flux into electromotive force.

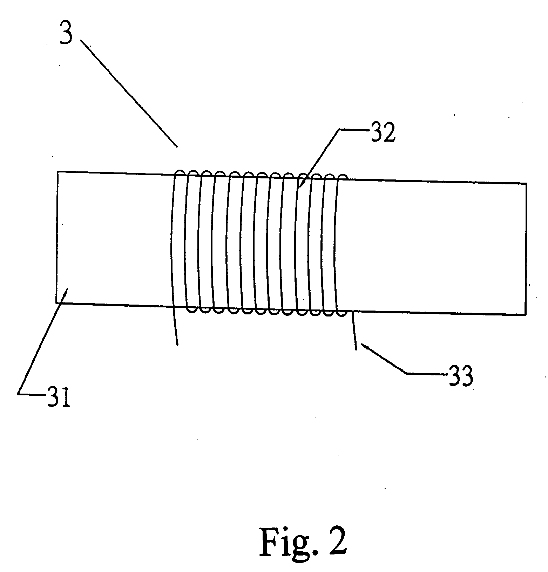

Fig. 2 illustrates the interior construction of the present invention, whereof the ferromagnetic materials is chosen to pursue the best performance.

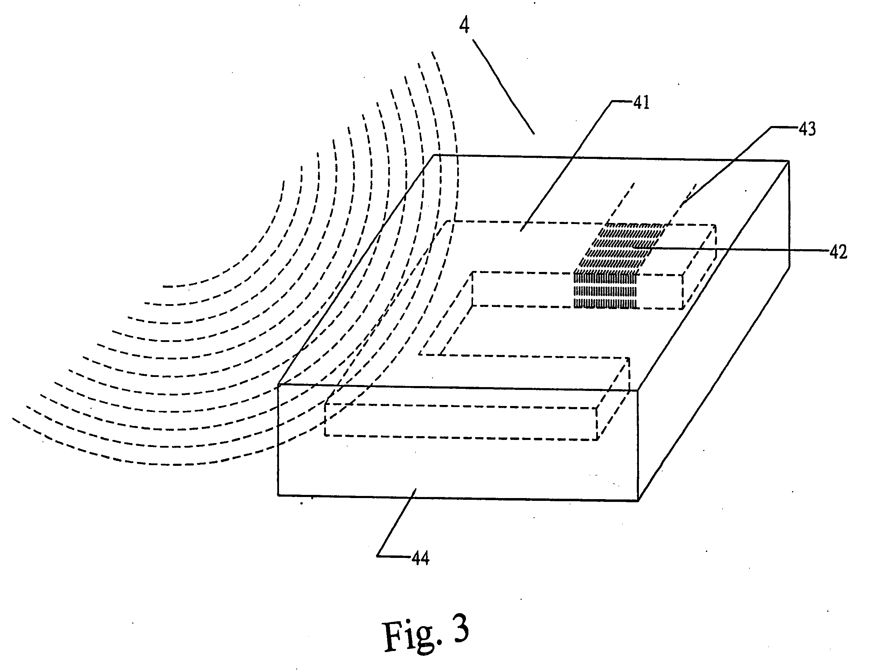

Fig. 3 illustrates enveloped package of the present invention, wherein there is ferromagnetic core 11 wound by coil 12, wherefrom output terminals 13 extend. An envelope encloses elements mentioned above. The number of plural coils 12 depends on the need of design.

With putting the present invention within the effective range of changing magnetic flux, such as nearby of electric motor or electric generator, the build-in ferromagnetic core 11 absorbs and concentrates the changing magnetic flux, and induces current of coil 12, provides electric energy without additional energy consumption, pollution, and with environmental protection and safety.

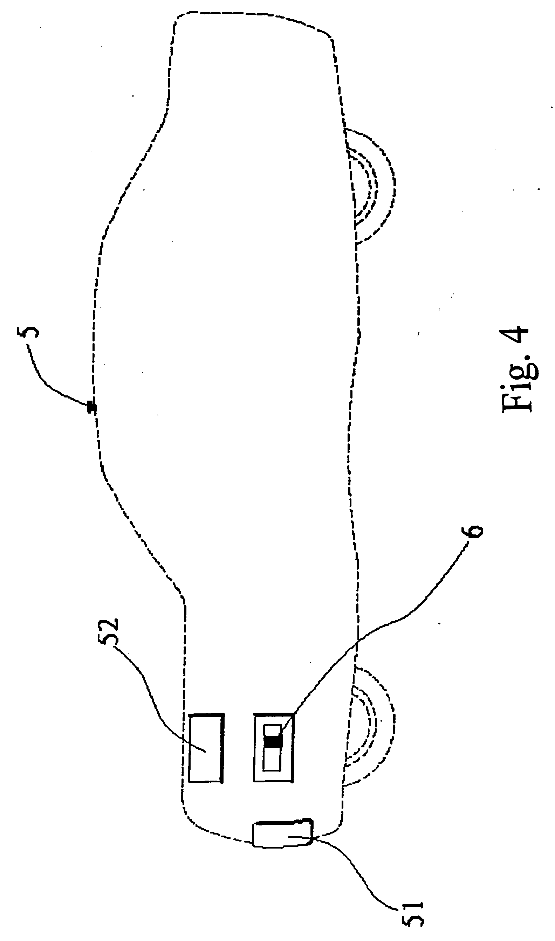

Fig. 4 illustrates that the power generator 1 of the present invention, attaching to nearby of automobile power generator 52 of car 5, receives changing magnetic flux leaking from automobile power generator 52 which consumes gasoline, and produces electric energy, by way of magnetic flux concentrating and converting of built-in ferromagnetic core 11 and coil 13, and lights one or several automobile lamp51, without additional energy consumption.

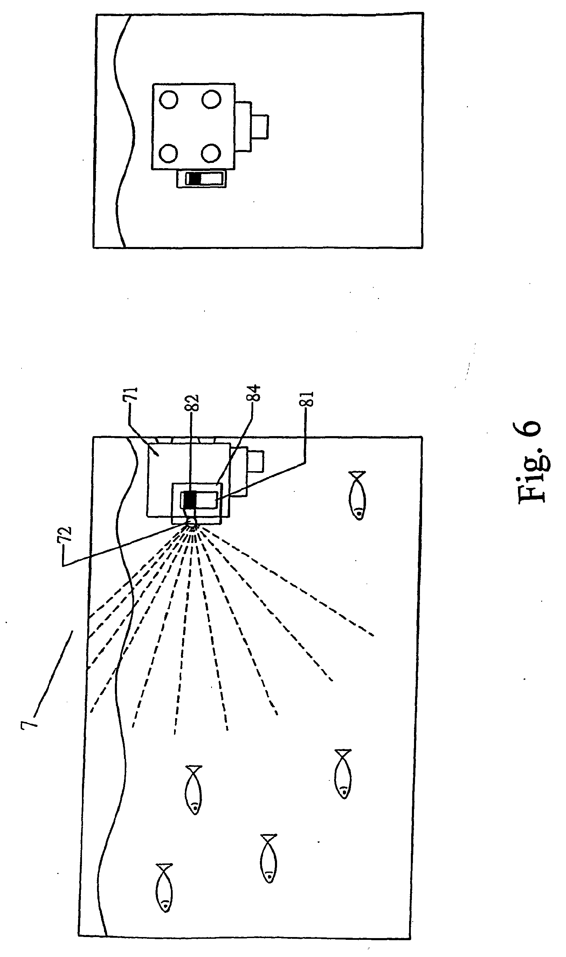

Fig. 6 illustrates that the present invention device enclosed by envelope 14, located at nearby of aquarium A's motor 71, produces induced current, by way of converting magnetic energy, which being released by energy-consuming aquarium A's motor 71, and lights aquarium lamp 72, which being directly attached to coil 12, without additional energy. In Fig.6, the output terminals are not pulled out. As the device does not connect to any other electric power source systems, particularly when the envelope is made water-proof, the safety of electric usage is promoted. If there is any short-circuit happening, problem will be limited within the present invention's device and will not spread to any other places.

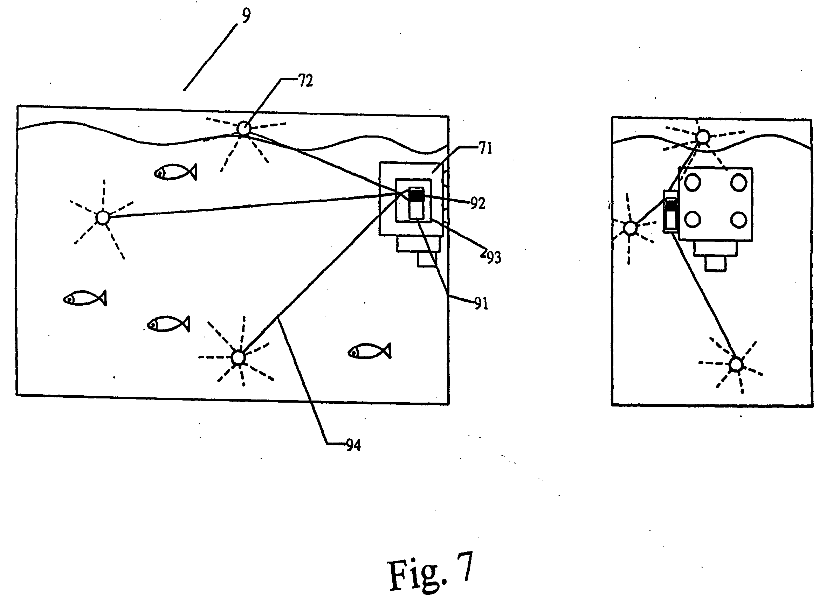

Fig. 7 illustrates that three pairs of output terminals extending from the present invention, which is enclosed by envelope 14 and located at nearby of aquarium B's motor 71, provide electric energy to three aquarium lamps 72. In this embodiment, device of the present invention affords three electric consumptions simultaneously.
with no additional energy. As the device does not connect to any other electric power source systems, particularly when the envelope is made water-proof, the safety of electric usage is promoted If there is any short-circuit happening, problem will be limited within the present invention's device and will not spread to any other places.

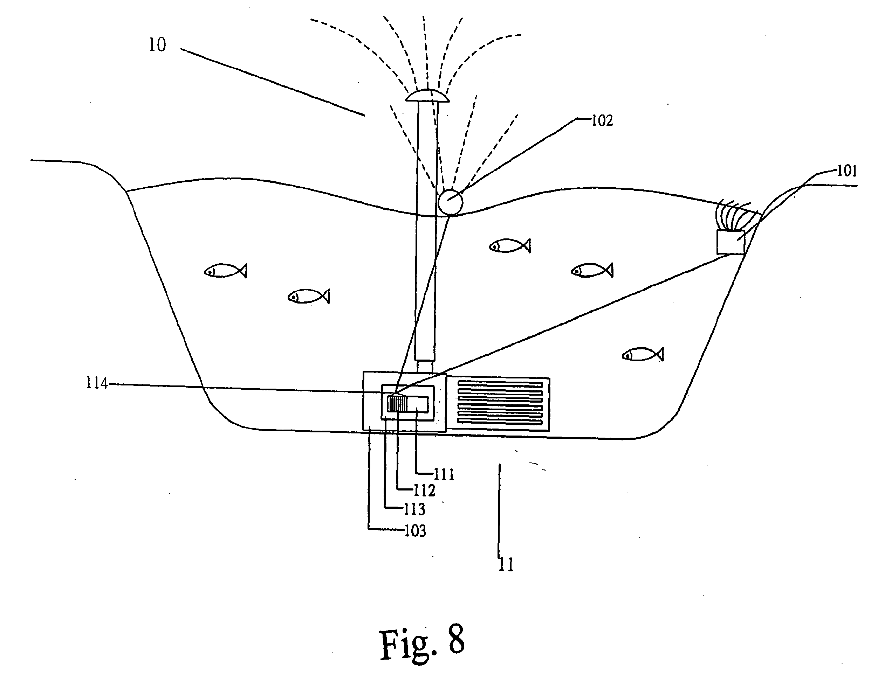

Fig. 8 illustrates the present invention's application to scenery-making design. Two pairs of output terminals 13, extending from the present invention's device which being enclosed by envelope 14, afford fog-maker 101 and scenery lamp 102 electric consumption simultaneously, with no additional energy. As the device does not connect to any other electric power source systems, particularly when the envelope is made water-proof, the safety of electric usage is promoted. If there is any short-circuit happening, problem will be limited within the present invention's device and will not spread to any other places.

The preferred embodiments mentioned above are able to provide one or plural electric energy sources simultaneously with no additional energy Moreover, when those are used under water, such as Fig. 6, Fig. 7, Fig. 8, the safety of electrical usage will be promoted, since the present invention does not connect to any other electrical power source system.

Modifications and variations can be made through the disclosed embodiments without departing from the subject of the invention as defined in the following claims.

## Claims

1. A device of providing electric energy automatically by receiving external changing magnetic flux, including a ferromagnetic core whose shape depends on the design need, coil which winds the said ferromagnetic core, one or plural pairs of output terminals extending from the said coil, an envelope enclosing all the said elements.

2. A device of claim 1 wherein the said core material is chosen according to it usage.

3. A device of claim 1 wherein the said coil is single or plural.

4. A device of claim 3 wherein the said coil is used as output terminal.

5. A device of providing electric energy automatically by receiving external changing magnetic flux, including a ferromagnetic core whose shape depends on the design need, coil which winds the said ferromagnetic core, one or plural pairs of output terminals extending from the said coil, a water-proof envelope enclosing all the said elements.

6. A device of claim 5 wherein the said core material is chosen according to its usage.

7. A device of claim 5 wherein the said coil is single or plural.

8. A device of claim 7 wherein the said coil is used as output terminal.

9. A device of being used under water and providing electric energy automatically by receiving external changing magnetic flux, including a ferromagnetic core whose shape depends on the design need, coil which winds the said ferromagnetic core, one or plural pairs of output terminals extending from the said coil, a water-proof envelope enclosing all the said elements.

10. A device of claim 9 wherein the said core material is chosen according to its usage.

11. A device of claim 9 wherein the said coil is single or plural.

12. A device of claim 11 wherein the said coil is used as output terminal.
